# EUROPÄISCHE PATENTSCHRIFT

(11) **EP 0 977 340 B1**
(45) Veröffentlichungstag und Bekanntmachung des Hinweises auf die Patenterteilung: **30.10.2002**
(21) Anmeldenummer: 98250294.0
(22) Anmeldetag: 18.08.1998
(51) Int. Cl.: H02K 1/27, H02K 1/02

(54) **Rotor für eine dynamoelektrische Maschine**
Rotor for a dynamoelectric machine
Rotor pour machine dynamo-électrique

(30) Priorität: 18.08.1997 DE 19736710
(43) Veröffentlichungstag der Anmeldung: 02.02.2000
(73) Patentinhaber: SIEMENS AKTIENGESELLSCHAFT, 80333 München (DE)
(72) Erfinder: Kümmlee, Horst, Dr., 13505 Berlin (DE)

(56) Entgegenhaltungen:
- DE-A- 2 140 358
- DE-A- 3 938 007
- US-A- 5 486 730
- US-A- 5 563 463

## Beschreibung

Die Erfindung liegt auf dem Gebiet der dynamoelektrischen Maschinen und ist bei der konstruktiven Ausgestaltung eines Rotors anzuwenden, dessen äußerer, im Querschnitt kreisringförmiger Bereich zur Erzeugung eines Magnetfeldes dient und hierzu aus einem Läuferjoch, aus in oder auf dem Läuferjoch angeordneten Bauteilen zur Erzeugung des Magnetfeldes und aus einem sich über die ganze Länge des Rotors erstreckenden rohrförmigen Spannhülse besteht.

Bei einem bekannten Rotor dieser Art besteht das Läuferjoch aus einem Stapel scheibenförmiger Metall-Lamellen oder aus einem massiven Hohlzylinder aus magnetisierbarem Material; als das Magnetfeld erzeugende Bauteile dienen Permanentmagnet-Segmente, die auf das Läuferjoch aufgeklebt sein können oder mittels einer unter elastischer Vorspannung stehenden dünnen Spannhülse aus einem hochfesten Material wie rostfreiem Stahl auf dem Läuferjoch radial und axial fixiert sind. Die Spannhülse wird dabei durch Aufwärmen aufgeweitet und dann auf die Permanentmagnet-Segmente aufgeschrumpft. Alternativ können die Magnetsegmente zunächst in die Stahlhülse eingesetzt, dann die Magnetsegmente unter Verwendung einer Spreizeinrichtung gespreizt und dadurch die Spannhülse elastisch aufgeweitet und nachfolgend Magnetsegmente und Spannhülse auf das Läuferjoch aufgeschoben werden. Die radialen Abmessungen der verschiedenen Teile sind dabei so dimensioniert, daß nach Abschluß des Zusammenbauens in der Spannhülse eine Restspannung verbleibt, die die Magnetsegmente fest gegen das Läuferjoch preßt und damit bei hohen Drehzahlen den Zentrifugalkräften entgegenwirkt. Dynamoelektrische Maschinen, auf deren Rotor einen solchen Aufbau aufweisen, haben einen Rotordurchmesser von etwa 50 mm, d.h. es handelt sich um dynamoelektrische Maschinen im Leistungsbereich von etwa 1 kW (DE 39 38 007 C2).

Bei anderen bekannten Rotoren für dynamoelektrische Maschinen wird das Magnetfeld mit Hilfe von in Nuten des Läuferkörpers eingelegten Wicklungen oder Kurzschlußstäben erzeugt, wobei die axial aus dem Läuferkörper herausragenden Enden der Kurzschlußstabe oder die Wickelköpfe mit Hilfe von Bandagen befestigt werden. Insbesondere bei Turbogeneratoren dienen als Bandagen ganzgeschmiedete hohlzylindrische Ringe, die mit dem einen Rand auf dem Läuferkörper aufsitzen und mit ihrem übrigen, freitragenden Bereich die Wickelköpfe umfassen. Derartige, auch als "Kappen" bezeichnete Bandagen werden im warmen Zustand mit Übermaß aufgesetzt und schrumpfen auf den Läuferkörper auf. Die Erwärmung der Kappen kann beispielsweise induktiv erfolgen (DE 25 30 437 A, DE 195 32 848 A1). Es ist auch bekannt, derartige Kappen vor dem Aufsetzen zu strecken, d.h. plastisch zu verformen, um ihre Festigkeit zu erhöhen (DE 21 40 358 A).

Ausgehend von einem Rotor mit den Merkmalen des Oberbegriffes des Patentanspruches 1 liegt der Erfindung die Aufgabe zugrunde, den äußeren, im Querschnitt kreisringförmigen Bereich des Rotors so auszugestalten, daß auch bei dynamoelektrischen Maschinen, die im Leistungsbereich über 1000 kW arbeiten und mit Drehzahlen über 10.000 U/min betrieben werden, die Fliehkräfte beherrscht werden.

Zur Lösung dieser Aufgabe ist gemäß der Erfindung vorgesehen, daß die rohrförmige Spannhülse durch Aufweitung des mit den Bauteilen und der Spannhülse bestückten Läuferjoches über die Streckgrenze des Läuferjochmaterials hinaus radial elastisch vorgespannt ist, wobei der magnetisierbare Stahl des Läuferjoches eine Streckgrenze kleiner/gleich 400 N/mm² aufweist und die rohrförmige Spannhülse eine Wanddicke von wenigstens 3 mm aufweist und aus einem Stahl der Festigkeit größer 1000 N/mm² besteht.

Bei einer derartigen Ausgestaltung des Rotors bilden das Läuferjoch, die das Magnetfeld erzeugenden Bauteile und die Spannhülse einen festgefügten Verband, der als komplettes Aktivteil vorgefertigt und dann auf der Rotorwelle befestigt wird. Das im Rahmen der Vorfertigung des Aktivteiles erforderliche plastische Aufweiten des Läuferjoches und die damit verbundene elastische Aufweitung der Spannhülse kann mittels einer Vorrichtung erfolgen, die analog zu bekannten Vorrichtungen ausgestaltet ist, wie sie von der Firma Krupp, DE zur Aufweitung von Kappenringen für Rotoren von Turbogeneratoren vertrieben werden (axiale Verschiebung von Doppelkeilen). Das Aufweiten kann aber auch durch Druckeinwirkung mittels einer hydraulischen Flüssigkeit erfolgen (ähnlich DE 21 40 358 A). - Die Befestigung des vorgefertigten kompletten Aktivteiles auf der Rotorwelle kann mittels des bekannten Ölpreßsitzes (ähnlich DE 1 200 760 C1) erfolgen. Eine andere Möglichkeit zur Aufbringung der Vorspannung zwischen Rotorwelle und dem Aktivteil besteht darin, die bei einer Rotation auftretenden Fliehkräfte zu nutzen. Hierzu werden die Rotorwelle und das Läuferjoch gegenläufig leicht kegelig gestaltet und miteinander in Drehung versetzt. Ein vorgespanntes Federelement schiebt dann das Aktivteil bei entsprechender Überdrehzahl axial auf die Rotorwelle auf.

Zur Herstellung des kompletten Aktivteils aus Läuferjoch, den das Magnetfeld erzeugenden Bauelementen und der Spannhülse wird zweckmäßig eine Spannhülse aus einem Stahl entsprechender Festigkeit verwendet. Geeignet sind aber auch Spannhülsen aus einem durch Keramik- oder Kohlenstoffasern verstärkten Aluminium.

Beim Aufweiten des Läuferjoches wird dieses elastischplastisch verformt, wozu bei einem Durchmesser des Läuferjoches von etwa 500 mm eine Aufweitung von etwa 3 bis 4 mm erforderlich ist. Der plastische Anteil der Verformung des Läuferjoches, der in der Spannhülse lediglich eine elastische Verformung hervorruft, wirkt sich als innere Vorspannung der Verbindung zwischen Läuferjoch und Spannhülse aus.

Die gemäß der Erfindung vorgesehene Ausgestaltung zur Fixierung der Bauelemente, die der Erzeugung des Magnetfeldes dienen, kann sowohl bei Rotoren zur Anwendung kommen, bei denen das Läuferjoch axiale Nuten zur Aufnahme von Wicklungen oder Leiterstäben aufweist, als auch bei Rotoren, bei denen in das Läuferjoch oder auf das Läuferjoch Permanentmagnete ein- bzw. aufgesetzt werden. Bei Läuferjochen mit aufgeklebten Permanentmagneten wird zweckmäßig zwischen den Permanentmagneten und der Spannhülse eine rohrförmige mechanische Schutzschicht angeordnet, um die Magnete bei der Aufweitung gegen ungleichmäßige Druckbelastung seitens der Spannhülse zu schützen. Als Schutzschicht kommt vorzugsweise eine Kupferschicht in Form einer Hülse in Betracht, gegebenenfalls auch eine Bandage aus harzgetränkter Glasfaserbänderung.

Zwei Ausführungsbeispiele des neuen Rotors sind in den Figuren 1 bis 3 dargestellt. Dabei zeigen
- Figur 1 und 2: einen Läufer mit Kurzschlußwicklung im Längs - und Querschnitt und
- Figur 3: einen Läufer mit Permanentmagneten im Querschnitt.

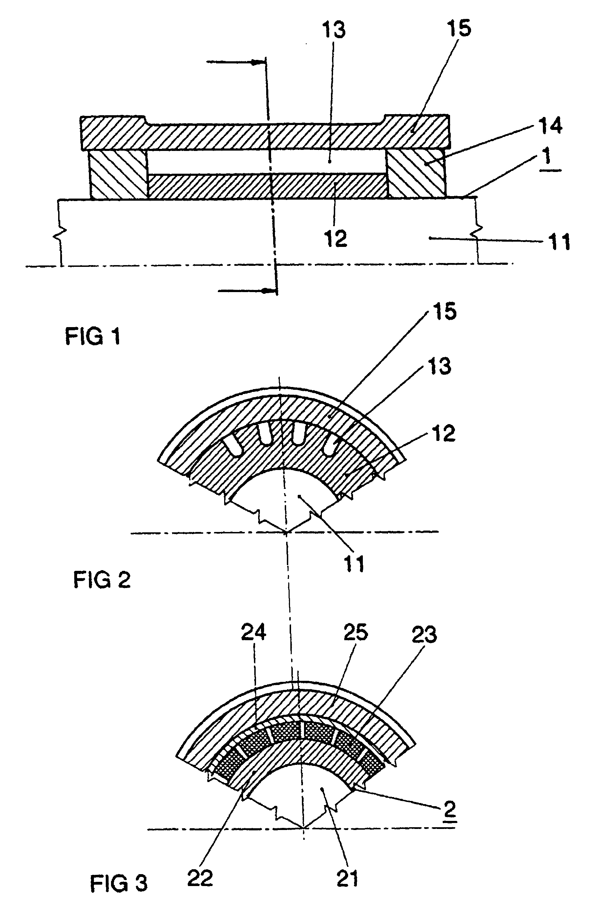

Gemäß den Figuren 1 und 2 besteht der Rotor 1 einer elektrischen Maschine aus der Welle 11, aus dem darüber auf der Welle angeordneten Läuferjoch 12, das in Längsnuten Leiterstäbe 13 aufnimmt, die an den beiden Stirnseiten durch Kurzschlußringe 14 untereinander verbunden sind, und der Spannhülse 15. Das Läuferjoch 12 ist aus einem handelsüblichen Stahl mit einer Festigkeit von 380 N/mm² gefertigt, während die Spannhülse 15 aus einem hochfesten Stahl mit einer Festigkeit von 1 300 N/mm², beispielsweise dem Stahl P900N der Firma Krupp besteht. Zur Herstellung dieses Rotors ist zunächst das Läuferjoch 12 mit den eingesetzten Leiterstäben 13 und den Kurzschlußringen 14 sowie der Spannhülse 15 über die Streckgrenze des Läuferjochmaterials hinaus aufgeweitet worden, wodurch die Spannhülse 15 das Läuferjoch 12 mit den eingelegten Leiterstäben 13 und den Kurzschlußringen 14 mit hoher Vorspannung umschließt. Anschließend wurde das aus Läuferjoch, Leiterstäben, Kurzschlußringen und Spannhülse bestehende Aktivteil auf die Welle 11 durch Anwendung der Technik "Zweistufiger Ölpreßsitz" aufgebracht.

Gemäß Figur 3 besteht der auf eine Rotorwelle 21 aufzubringende Aktivteil 2 aus einem Läuferjoch 22, aus auf die Mantelfläche des Läuferjoches aufgeklebten Permanentmagneten 23, aus einer Schutzhülle 24 in Form einer Kupferhülse mit einer Wandstärke von etwa 0,8 mm und aus der Spannhülse 25. Materialien für Läuferjoch 22 und Spannhülse 25 entsprechen denen des Ausführungsbeispieles gemäß den Figuren 1 und 2. Herstellung dieses Aktivteiles und Aufbringen des Aktivteiles auf die Rotorwelle 21 erfolgen in gleicher Weise wie bei dem Ausführungsbeispiel gemäß Figur 1.

## Patentansprüche

1. Rotor (1) für eine dynamoelektrische Maschine, dessen äußerer, im Querschnitt kreisring-förmiger Bereich aus einem Läuferjoch (12) aus einem magnetisierbaren Stahl,
aus in oder auf dem Läuferjoch (12) angeordneten Bauteilen zur Erzeugung des Magnetfeldes
und aus einer sich über die ganze Länge des Rotors (1) erstrekkenden, im Preßsitz aufsitzenden rohrförmigen Spannhülse (15) aus einem hochfesten Metall besteht,
**dadurch gekennzeichnet,**
**daß** die rohrförmige Spannhülse (15) durch Aufweitung des mit den Bauteilen (13) und der Spannhülse bestückten Läuferjoches (12) über die Streckgrenze des Läuferjochmaterials hinaus radial elastisch vorgespannt ist,
wobei der magnetisierbare Stahl des Läuferjochs (12) eine Streckgrenze kleiner/gleich 400 N/mm² aufweist und die rohrförmige Spannhülse (15) eine Wanddicke von wenigstens 3 mm aufweist und aus einem Stahl der Festigkeit größer 1000 N/mm² besteht.

2. Rotor nach Anspruch 1,
**dadurch gekennzeichnet,**
**daß** die zur Erzeugung des Magnetfeldes dienenden Bauteile aus auf das Läuferjoch (22) aufgeklebten Permanentmagneten(23) bestehen und daß zwischen diesen Permanentmagneten (23) und der Spannhülse (25) eine rohrförmige mechanische Schutzschicht (24) angeordnet ist.

## Claims

1. Rotor (1) for a dynamo-electric machine, whose outer, annular area in cross-section consists of a rotor yoke (12) made of a magnetisable steel, components arranged in or on the rotor yoke (12) to generate the magnetic field, and a tubular bushing (15) made of a high-tensile metal, resting in the pressure fit and extending the entire length of the rotor (1), **characterised in that** the tubular bushing (15) is radially elastically pre-tensioned by expanding the rotor yoke (12) fitted with the components (13) and the bushing beyond the yield point of the rotor yoke material, whereby the magnetisable steel of the rotor yoke (12) has a yield point below or equal to 400 N/mm² and the tubular bushing (15) has a wall thickness of at least 3 mm and consists of a steel with a strength greater than 1000 N/mm².

2. Rotor according to Claim 1, **characterised in that** the components used to generate the magnetic field consist of permanent magnets (23) glued to the rotor yoke (22) and that a tubular mechanical protection layer (24) is arranged between these permanent magnets (23) and the bushing (25).

## Revendications

1. Rotor (1) pour une machine dynamo-électrique, dont la région extérieure à section transversale en forme de couronne est constituée d'une culasse (12) d'induit en acier magnétisable,
d'éléments disposés dans ou sur la culasse (12) d'induit pour produire le champ magnétique,
et d'une douille (15) de serrage tubulaire s'étendant sur toute la longueur du rotor (1), montée en ajustement serré et réalisée en métal à haute résistance,
**caractérisé en ce que** la douille (15) de serrage tubulaire est, par élargissement de la culasse (12) d'induit équipée des éléments (13) et de la douille de serrage, élastiquement précontrainte en direction radiale au-delà de la limite d'élasticité du matériau de la culasse d'induit,
l'acier magnétisable de la culasse (12) d'induit possédant une limite d'élasticité inférieure ou égale à 500 N/mm², et la douille (15) de serrage tubulaire une épaisseur de paroi d'au moins 3 mm et étant réalisée en acier de résistance supérieure à 1000 N/mm².

2. Rotor suivant la revendication 1, **caractérisé en ce que** les éléments servant à produire le champ magnétique consistent en des aimants (23) permanents collés sur la culasse (22) d'induit, et **en ce qu'**une couche (24) de protection mécanique tubulaire est disposée entre ces aimants (23) permanents et la douille (25) de serrage.
